# EUROPEAN PATENT SPECIFICATION

(11) **EP 2 326 591 B1**
(45) Date of publication and mention of the grant of the patent: **16.08.2017**
(21) Application number: 09800827.9
(22) Date of filing: 17.07.2009
(51) Int. Cl.: A01M 7/00

(54) **ARM ARRANGEMENT FOR SUPPORTING COUPLER SECTION CARRIED AT END OF NURSE VEHICLE FLUID TRANSFER CONDUIT**
ARMANORDNUNG ZUR STÜTZE EINES KOPPLERTEILS AM ENDE EINER FLÜSSIGKEITSÜBERTRAGUNGSLEITUNG EINES VERSORGUNGSFAHRZEUGES
AGENCEMENT DE BRAS POUR SUPPORTER UNE SECTION DE COUPLEUR TRANSPORTÉE AU NIVEAU D'UNE EXTRÉMITÉ DU CONDUIT DE TRANSFERT DE FLUIDE D'UN VÉHICULE RAVITAILLEUR

(30) Priority: 24.07.2008 US 178933
(43) Date of publication of application: 01.06.2011
(73) Proprietor: Deere & Company, Moline, IL 61265 (US)
(72) Inventor: HUMPAL, Richard, Allen, Ankeny IA 50023 (US); FUNSETH, Travis, Gene, Ankeny IA 50021 (US); HUEGERICH, Daniel, Joseph, Ankeny IA 50023 (US); O'NEAL, Tonya, Maria, Davenport IA 52807 (US)
(74) Representative: Reichert, Christian
(86) International application number: PCT/US2009/050920
(87) International publication number: WO 2010/011568

(56) References cited:
- US-A- 2 922 446
- US-A- 3 199 553
- US-A- 3 620 268
- US-A- 3 989 065
- US-A- 4 142 551
- US-A- 4 708 179
- US-A- 4 774 979
- US-A- 6 000 428
- US-A1- 2004 084 551
- US-B2- 7 325 777

## Description

The present invention relates to a nurse tank vehicle including a fluid transfer conduit having a first fluid coupler section at one end adapted for being coupled in fluid transfer relationship to a mating second fluid coupler section carried by a sprayer vehicle when it is desired to transfer fluid from the nurse tank vehicle to the sprayer vehicle, said nurse tank vehicle including an arm arrangement having an inner end connected to said nurse tank vehicle; a connecting bracket mounting said first coupler section to an outer end of said arm arrangement; said outer end of said arm arrangement being mounted for both transverse and up and down movements.

A ship to ship refuling device is known from US 3,199,553, where a supply nozzle is coupled to a receiver coupling by providing means for aligning both, the receiver coupling and the nozzle with a spanning cable so that when the cable is made taut the receiver coupling and the nozzle will be in proper alignment with each other as the nozzle approaches the receiver coupling for connecting engagement of therewith.

Further, US 2004/084551 A1 discloses a sprayer system utilizing a docking drogue and probe assembly to quickly and easily allow refilling of the sprayer tanks with a material from an enlarged nurse tank. The coupling of the drogue and probe allows for fluid communication, as well as electronic transmission of material data to a processor in the prime mover. This processor software also receives input regarding field data and crop data, as well as feedback data from the sprayer regarding the material application. A GPS system on the prime mover allows for tracking the spraying operation, while a time stamp in the processor software tracks the timing of the spraying operation. This system thus allows for accurate accountability and traceability for the use of materials during the spraying operation.

The process of applying liquid chemicals, such as fertilizers or herbicides, for example, to a field requires with a self-propelled or towed sprayer vehicle involves the step of refilling fluid tanks of the sprayer vehicle with fluids carried by a nurse tank vehicle. Due to the desire of keeping the re-fill time to a minimum, the fluid transfer conduit of the nurse vehicle and the fluid intake conduit of the sprayer vehicle are relatively large and respectively include relatively large first and second coupler sections that are selectively connected together to form a coupler assembly establishing a relatively large flow path between the transfer and intake conduits. The size of the transfer conduit and its associated coupler section results in them being relatively heavy and unwieldy for being handled manually as is sometimes done when connecting the coupler section of the transfer conduit to the coupler section of the intake conduit. Further, the transfer of fluid from the nurse tank vehicle to the sprayer vehicle must often take place on uneven terrain requiring the coupler section of the nurse vehicle be moved both vertically and angularly in order to align it with the coupler section carried at the end of the sprayer vehicle intake conduit.

Accordingly, an object of this invention is to provide relatively large conduits for permitting quick transfer of fluid while making it relatively easy for an operator to manually effectuate the connection between the connector section of the fluid transfer conduit and the connector section of the fluid intake conduit.

The object will be achieved by the teaching of claim 1. Further advantageous embodiments are described within the accompanying claims.

Accordingly, a nurse tank vehicle of the above mentioned type is provided, wherein said connecting bracket is a swivel bracket mounted to said outer end of the arm arrangement for swiveling about an upright axis and said first fluid coupler section is mounted to said connecting bracket for tilting about a transverse axis.

According to the present invention, there is provided a support arrangement for aiding the manual coupling of separable connector sections of a coupler arrangement used to connect a transfer conduit of a sprayer nurse vehicle to an intake conduit of a sprayer vehicle.

An object of the invention is to provide an arm arrangement for supporting a first coupler arrangement section, that is joined to an end of a nurse vehicle fluid transfer conduit, with the arm arrangement being constructed for permitting relatively easy manipulation of the first coupler section so that it may be aligned with a second coupler section of the coupler arrangement that is in a fixed location on a sprayer vehicle.

This object is achieved by an arm arrangement mounted to a support base, carried by the nurse vehicle, for swinging about a first upright axis, and including an elongate arm section mounted for pivoting vertically and carrying a swivel bracket at its outer end, with the swivel bracket being constructed for carrying a fluid coupler section so that the coupler section may be selectively swiveled about orthogonal upright and transverse axes. Further aspects of the object are achieved by constructing the elongate arm section in the form of a parallel linkage and providing by providing a counterbalancing arrangement for counterbalancing the combined suspended weight of the elongate arm section together with the fluid coupler section and accompanying fluid transfer conduit.
Fig. 1 is a schematic view of a sprayer vehicle positioned close to a nurse vehicle carrying an arm arrangement constructed according to the principles of the present invention and supporting a fluid coupler section in a position for being coupled to a mating fluid coupler section carried by the sprayer vehicle.
Fig. 2 is a left front perspective view of a portion of the nurse vehicle showing the arm arrangement in an extended condition and showing the fluid coupler section mounted to a bracket at an outer end of the arm arrangement, with the bracket being swiveled such that the fluid coupler section is approximately in fore-and-aft alignment with the parallel linkage section of the arm arrangement and with the fluid coupler section being tilted upwardly about its transverse pivotal connection with the bracket.
Fig. 3 is a right rear perspective view showing the arm arrangement in a folded, stored position.
Fig. 4 is a left side perspective view showing the arm arrangement in an intermediate position between the extended position of Fig. 2 and the folded position of Fig. 3.
Fig. 5 is a perspective view showing an outside of the connection between the swivel coupling and the torsion shaft at one side of the fluid coupler section.
Fig. 6 is a perspective view showing an inside of the connection shown in Fig. 5.

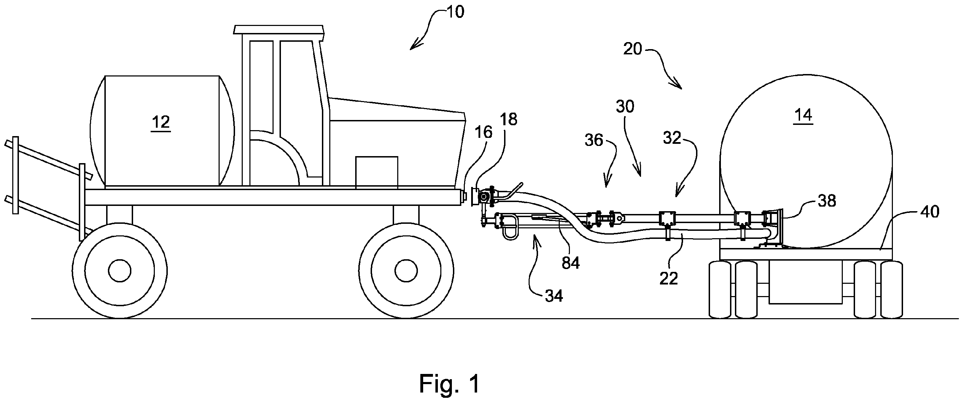

Referring now to Fig. 1, there is shown a sprayer vehicle 10 and a nurse vehicle 20 parked in close proximity to each other for permitting a tank 12 carried by the sprayer vehicle 10 to be refilled from a tank 14 carried by the nurse vehicle 20. For the purposes of this application, right and left designations are considered with respect to a viewed standing behind the nurse tank vehicle 20 having a forward direction of travel into the page as viewed in Fig. 1.

Provided for accomplishing refill of the sprayer vehicle tank 12, an intake conduit (not shown) is coupled to the sprayer vehicle tank 12 and has a forward end connected to a coupler section 16 defining an insert body adapted for being received within a receptacle defined by a coupler section 18 of the nurse vehicle, which is connected to one end of a fluid transfer conduit 22 connected to the nurse vehicle tank 14 in a manner not shown. The coupler section 18 is mounted to the outer end of an arm arrangement 30 comprising inner and outer arm sections 32 and 34, respectively, interconnected by a double hinge arrangement 36, with the inner arm section 32 having an inner end pivotally coupled to an arm support member 38 that is fixed to a bed 40 of the nurse vehicle. The fluid transfer conduit 22 has a flexible section having a length at least equal to an extended length of the arm arrangement 30 for purposes which will become apparent from the following description.

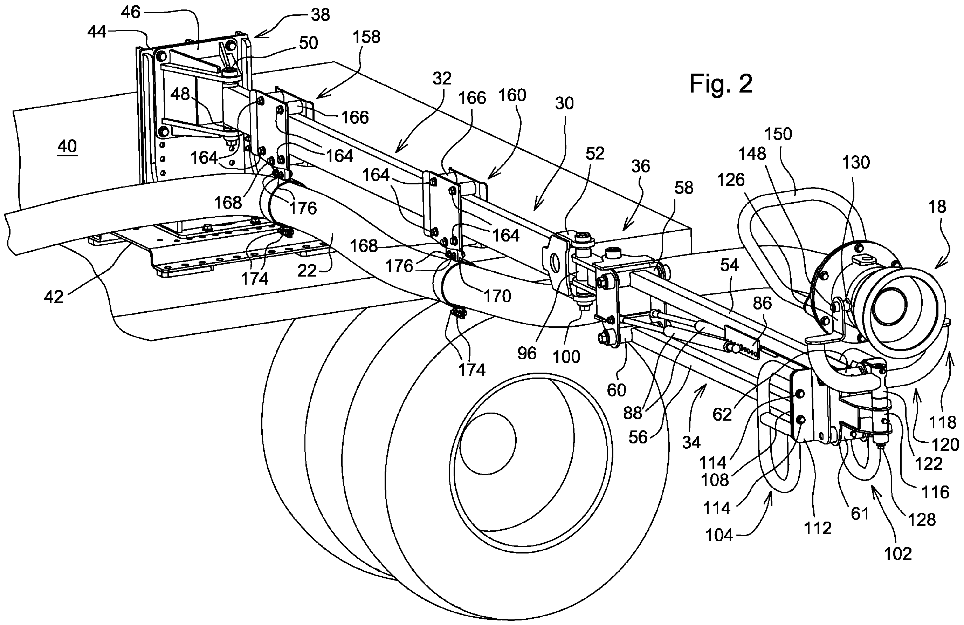

Referring now also to Figs. 2 - 4, it can be seen that the arm support member 38 includes a generally horizontal base 42 including an elevated central region having opposite sides joined to vertically offset flanges which are bolted to the bed 40, with an upright post structure 44 having a mounting plate at its bottom bolted onto the elevated middle section of the base 42 and having an upper region defined by an arm mount bracket 46, which is triangular in top view and defines a clevis at its vertex. The arm support member 38 can be mounted in a variety of ways to accommodate differing nurse tank frame constructions.

The inner arm section 32 of the arm arrangement 30 comprises an elongate, rectangular tube having an upright cylindrical tube 48 welded to its inner end, the tube 48 being received in, and coupled to the arm support clevis by a pivot pin 50 which cooperates with the tube 48 to establish an upright axis about which the arm arrangement 30 may be pivoted from side-to-side. An outer end of the inner arm section 32 is defined by a clevis 52.

The outer arm section 34 of the arm arrangement comprises a parallel linkage defined by upper and lower links 54 and 56, respectively, having inner ends defined by horizontal tubes 58 and 60, and outer ends defined by horizontal tubes 61 and 62.

The inner and outer ends of the upper and lower parallel links 54 and 56 are respectively pivotally connected to inner and outer support members 64 and 66, respectively. Specifically, the inner support member 64 defines a inner vertical clevis section 68 and an outer horizontal clevis section 70, with the horizontal tubes 58 and 60 of the inner ends of the links 54 and 56 being received in, and pivotally coupled to, the vertical clevis section 70 by upper and lower pivot pins 72 and 74, respectively. The outer support member 66 includes an inner vertical clevis section 76 and an outer horizontal clevis section 78, with the horizontal tubes 61 and 62 of the outer ends of the links 54 and 56 being received within, and pivotally coupled to, the inner vertical clevis section 76 by pivot pins 80 and 82, respectively. Fixed to opposite sides of a mid-region of the upper link 54 are a pair of parallel, gas strut mounting brackets 84, with each bracket 84 containing a plurality of adjustment holes 86 spaced along its length. A pair of extensible and retractable gas struts 88 have cylinder ends respectively pivotally coupled to the brackets 84 by a fastener 90 received in a selected one of the holes 86, the struts 88 having rod ends respectively coupled to upright plates defining the vertical clevis 70 by fasteners 92 inserted through holes provided in a lower region of the clevis 70 just above the pivot pin 74. The gas struts 88 are charged and mounted for supporting a substantial portion of a combined weight of the parallel links 64 and 66, the coupler section 18 and the transfer conduit 22 that is suspended for vertical movement at the pivot bolts 72 and 74. The action of the struts 88 substantially reduce the effort an operator must exert in manually moving the coupler section 18 during the operation of refilling the planter vehicle tank 12 from the fluid supply carried by the tank 14 of the nurse vehicle 20, as described below in further detail.

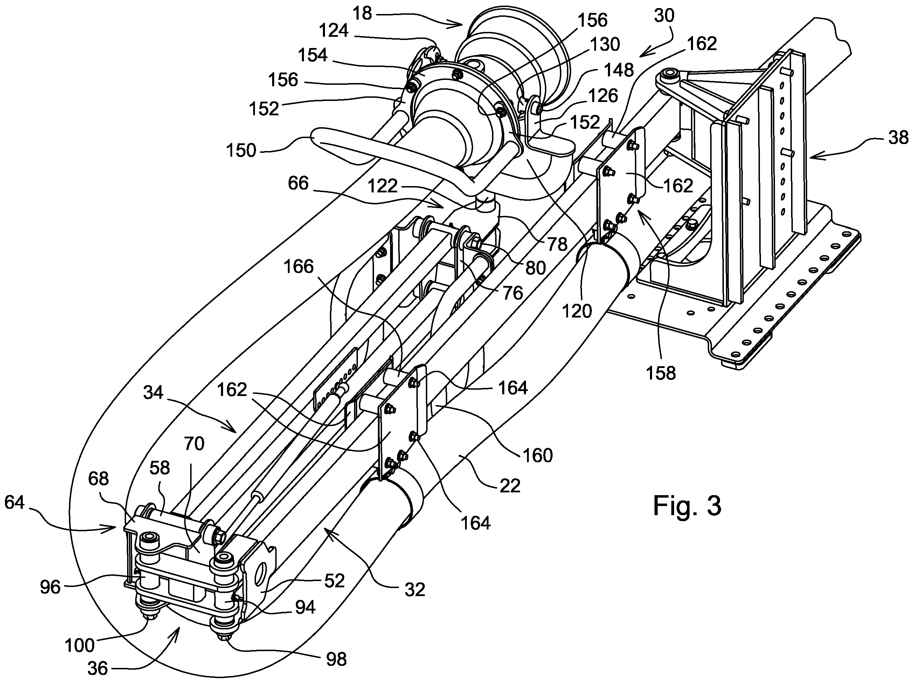

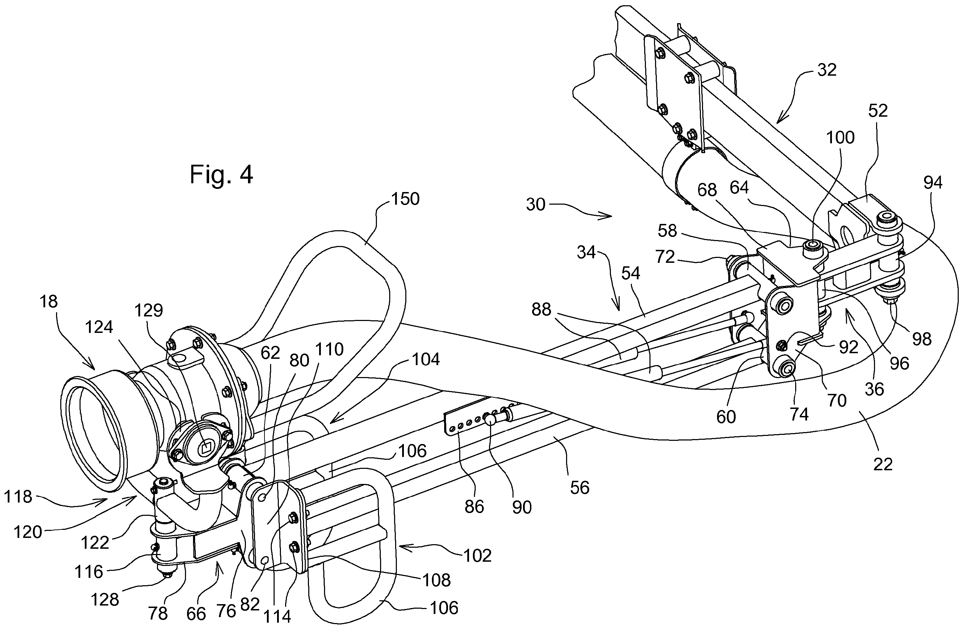

The double hinge structure 36 provided for interconnecting the outer end of the inner arm section 32 to the inner end of the outer arm section 34 and includes inner and outer ends respectively defined by inner and outer, upright tubes 94 and 96, with the inner tube 94 being received in, and coupled to the clevis 52 by a pivot pin 98, and with the outer tube 96 being received in, and coupled to the clevis 68 by a pivot pin 100. Thus, it will be appreciated that the double hinge structure 36 permits the outer
arm section 34 to be swung approximately 360° at its connection with the outer end of the inner arm section 32. Handles 102 and 104 are provided at opposite sides of the outer end region of the outer arm section 34 that an operator may grasp when maneuvering the arm arrangement 30 between its folded stored position shown in Fig. 3 and its extended position shown in Fig. 2, for example. As can best be seen in Figs. 2 and 4, the handles 102 and 104 are identical and each includes a tubular structure 106 bent to form a loop and being joined to a vertical mounting plate 108 extending at a right angle to the arm section 34. Mounted to opposite sides of the support structure 66 at the outer end of the arm section 34 are right and left support brackets 110 and 112 being right angular in form and having parallel first legs located at opposite sides of the vertical front clevis section 76 of the support structure 66 and secured thereto with the pivot pins 80 and 82. Second legs of the support brackets 110 and 112 project oppositely outwardly form the clevis section 76, with the handle mounting plates 108 respectively being secured o these second legs by mounting bolts 114.

The fluid coupler section 18 at the end of the flexible hose 22 is supported at the outer end of outer arm section 34 by the support member 66. Specifically, the outer clevis 78 of the support member 66 includes an upright, cylindrical tube 116, and mounted to the support member 66 is a coupler section swivel mounting 118 comprising a generally U-shaped member 120 having a bottom embodying a centrally located upright tube 122 and having opposite ends joined to generally upright limbs having upper ends defined by right and left, L-shaped members having respective vertical legs 124 and 126. The swivel mounting 118 is located with the upright tube 122 resting atop the upright tube 116 of the rear support member 66, with a pivot pin 128 being received in the tubes and defining an upright axis about which the swivel mounting 118 may pivot.

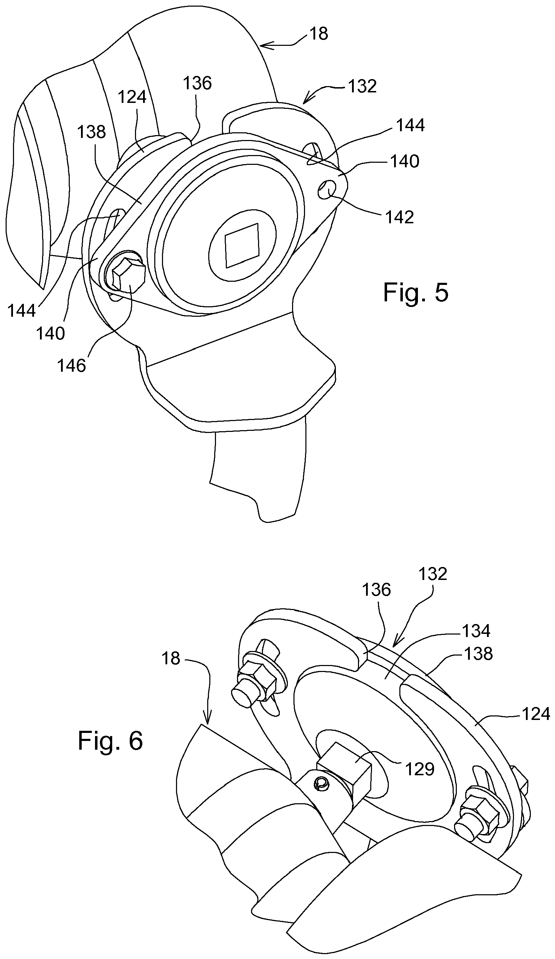

The fluid coupler section 18 is located between the vertical legs 124 and 126. Provided in axial alignment with each other, and projecting outwardly from opposite sides of a middle location of the coupler section 18, are a torsion bar 129 (Fig. 4) and a cylindrical mount 130 (Fig. 2). Referring now also to Figs. 5 and 6, it can be seen that the torsion bar 129 is square in cross-section and is received within a similarly shaped opening in a flanged bushing 132 having a cylindrical surface 134 received in a complimentary shaped cylindrical opening provided in the vertical leg 124, with it being noted that a vertical slot 136 extends downwardly to the cylindrical opening from a top edge of the vertical leg 124 so that, prior to having the bushing mounted thereon, the torsion bar may pass vertically into the cylindrical opening during the assembly of the coupler section 18 to the swivel mounting 118. The flanged bushing 132 includes a mounting flange 138 including mounting ears 140 at its opposite sides, the ears 140 each being provided with a mounting hole 142, and the vertical leg 124 being provided with arcuate openings 144 disposed so as to remain aligned with the holes 142 so as to permit a desired amount of wind-up to be produced in the torsion bar 129 before tightening bolts 146 (only one shown) received through the aligned holes 142 and arcuate openings 144. The cylindrical mount 130 at the opposite side of the coupler section 18 is provided with a threaded axial bore which receives a threaded bolt 148 (Figs. 2 and 3) for establishing a pivot axis about which the fluid coupler section 18 may pivot when being aligned with the fluid coupler section 16 when coupling the sections together during the refill operation. It is to be noted that the pivot axis established by the bolt 148 is located approximately at the center of mass of the fluid coupler section 18 so that the effort required to tilt the coupler section 18 alone is minimal. However, the hose 22 and fluid contained therein can result in a substantial unbalanced weight acting to tilt the fluid coupler section about the axis of the bolt 148, as viewed in Fig. 3. Thus, the torsion shaft 129 is wound-up in the clockwise direction in Fig. 3 so that it exerts a counterclockwise force tending to rotate the coupler section 18 in the counterclockwise direction.

To aid an operator in pivoting the coupler section 18 either about the upright pivot axis, defined by the bolt 128, or the transverse pivot axis, defined by the pivot pin 148, a generally U-shaped handle 150 is provided, with legs of the handle, as best shown in Fig. 3, each being provided with an in-turned end section 152 secured against a flange 154 of the coupler section 18 by a bolt 156. The flange 154 is located close to the connection of the fluid coupler section 18 to the transfer conduit 22. Thus, it will be appreciated that an operator can easily pivot the coupler section about the upright pivot axis by grasping and exerting sideways forces on the handle 150, or the operator can easily tilt the coupler section 18 about the transverse pivot axis by gripping the handle 150 and either exerting an upward or a downward force on the handle 126.

The fluid transfer conduit 22 is coupled to the inner arm section 32 by identical, inner and outer conduit hangers 158 and 160, respectively, located adjacent the support member 38, and at a location spaced from the clevis 52. The hangers 158 and 160 each include a pair of vertical plates 162 located on opposite sides of, and secured to, the inner arm section 32 by four bolts 164 arranged in a rectangular pattern, with each passing through a tubular roller 166 to allow the hangers 158 and 160 to move relative the arm section 32 as the arm arrangement 30 is moved. Located between, and at a level below, the bottom two bolts 164 in each of the hangers 158 and 160 is a fifth bolt 168 which passes through a tubular spacer (not shown) to which a rectangular mounting tab 170. Each of the hangers 158 and 160 includes a pair of strap halves 172 which together encircle the hose 22, with out-turned first ends being secured together with a set of bolts 174, and with out-turned second ends being secured together and to an associated one of the mounting tabs 170 by a set of bolts 176. These locations of the hangers 158 and 160 are chosen for minimizing resistance to the flexure of the conduit 22 during moving the arm arrangement 30 between its folded, stored position, shown in Fig. 3, and its extended position, shown in Fig. 2, without the conduit interfering with the folding of the arm arrangement 30.

In operation, assuming the fluid in the tank 12 of the sprayer vehicle 10 has become depleted so as to require a refill, the sprayer vehicle 10 will be driven to any convenient location close enough to the nurse vehicle 10 to allow for the fluid coupler section 16 carried by the sprayer vehicle 10 to be coupled to the fluid coupler section 18 carried by the nurse vehicle 14.

Once the sprayer vehicle 10 is parked, the operator will dismount and approach the arm arrangement 30 of the nurse vehicle 20, which will initially be in its folded stored position on the trailer bed 40, as shown in Fig. 3. The operator will then grab the closest handle 102, 104 and pull outwardly so that the arm arrangement 30 will become extended, as shown in Fig. 1, with the amount of extension depending on the distance between the sprayer vehicle 10 and nurse vehicle 20. Assuming that the coupler section 18 has to be raised or lowered to approximate the level of the coupler section 16, the operator will exert a lifting or lowering force on the outer arm section 34, which, due to its construction as a parallel linkage, will result in the coupler section 18 being raised or lowered as desired. If further manipulation of the coupler section 18 is required for alignment, the operator will grasp the handle 150 and exert a force tending to either swivel the coupler section 18 and swivel mount 118 about the upright axis defined by the bolt 128 or to tilt the coupler section 18 about the transverse axis defined by the pins 148. When the coupler sections 16 and 18 are properly aligned, further extension of the arm arrangement will result in the receptacle defined by the coupler section 18 being received over the insert defined by the coupler section 16. A control system (not disclosed) will then act to automatically, sequentially cause the coupler sections 16 and 18 to be locked and sealed together, a fluid transfer pump (not shown) to be controlled so as to permit substantially leak-free transfer of fluid from the nurse vehicle tank 14 to the sprayer vehicle tank 12, to interrupt the pumping action of the fluid transfer pump when the tank is full, and thereafter effect leak free disconnection of the coupler sections 16 and 18.

## Claims

1. A nurse tank vehicle (20) including a fluid transfer conduit (22) having a first fluid coupler section (18) at one end adapted for being coupled in fluid transfer relationship to a mating second fluid coupler section (16) carried by a sprayer vehicle (10) when it is desired to transfer fluid from the nurse tank vehicle (20) to the sprayer vehicle (10), said nurse tank vehicle including an arm arrangement (30) having an inner section (32) connected to said nurse tank vehicle (20); a connecting bracket mounting said first coupler section (18) to an outer section (34) of said arm arrangement (30); said outer section (34) of said arm arrangement (30) being mounted for both transverse and up and down movements, said connecting bracket is a swivel bracket (118) mounted to said outer section (34) of the arm arrangement (30) for swiveling about an upright axis (128) and said first fluid coupler section (18) is mounted to said connecting bracket for tilting about a transverse axis (148), **characterized in that** inner and outer arm sections (32, 34), respectively, are interconnected by a double hinge arrangement (36), wherein the double hinge arrangement (36) permits the outer arm section (34) to be swung approximately 360° at its connection with an outer end of the inner arm section (32).

2. The nurse tank vehicle (20), as set forth in claim 1, wherein said first fluid coupler section (18) is mounted to said connecting bracket for tilting about a transverse axis (148) disposed in crosswise relationship to said upright axis (128).

3. The nurse tank vehicle (20), as defined in claim 1 or 2, wherein the inner arm section (32) of the arm arrangement (30) is mounted for pivoting about an inner upright pivot axis (50).

4. The nurse tank vehicle (20), as defined in one of the claims 1 to 3, wherein said hinge joint arrangement (36) defines a double hinge joint, including a second upright hinge joint axis (98, 100), with said at least one upright hinge joint axis (98, 100) being defined between one side of said hinge joint arrangement (36) and said inner arm section (32), and said second upright hinge joint axis (98, 100) being defined between another side of said hinge joint arrangement (36) and said outer arm section (34).

5. The nurse tank vehicle (20), as defined in one of the claims 1 to 4, wherein said outer arm section (34) defines a parallel linkage (54, 56) oriented for up and down movement relative to said hinge joint arrangement (36).

6. The nurse tank vehicle (20), as defined in claim 5, wherein a weight balance device is coupled to said parallel linkage (54, 56) for counterbalancing weight exerted on said parallel linkage (54, 56) tending to urge the parallel linkage (54, 56) downward.

7. The nurse tank vehicle (20), as defined in one of the claims 1 to 6, wherein said fluid transfer conduit (22) includes a flexible conduit section having an end connected to said first fluid coupler section (18); and at least one conduit hanger (158, 160) connecting said flexible conduit section to said arm arrangement (30).

8. The nurse tank vehicle (20), as defined in claim 6 or claim 7, when dependent on claim 6, wherein said weight balance device includes at least one gas strut (88).

9. The nurse tank vehicle (20), as defined in claim 6 or in one of claims 7 and 8, when dependent on claim 6 wherein said weight balance device is a torsion bar located along said transverse axis (148).

## Patentansprüche

1. Versorgungstankfahrzeug (20), das eine Flüssigkeitsübertragungsleitung (22) umfasst und ein erstes Flüssigkeitskopplerteil (18) an einem Ende aufweist, das geeignet ist, in einem Flüssigkeitsübertragungsverhältnis an ein entsprechendes zweites, von einem Sprühfahrzeug (10) getragenes Flüssigkeitskopplerteil (16) gekoppelt zu werden, wenn Flüssigkeit aus dem Versorgungstankfahrzeug (20) zu dem Sprühfahrzeug (10) übertragen werden soll, wobei das Versorgungstankfahrzeug eine Armanordnung (30) umfasst, die einen inneren Abschnitt (32) aufweist, der mit dem Versorgungstankfahrzeug (20) verbunden ist, wobei ein Anschlusswinkel das erste Kopplerteil (18) an einem äußeren Abschnitt (34) der Armanordnung (30) befestigt, wobei der äußere Abschnitt (34) der Armanordnung (30) sowohl für Quer- als auch für Auf-und-Abbewegungen befestigt ist, wobei es sich bei dem Anschlusswinkel um einen Schwenkwinkel (118) handelt, der an dem äußeren Abschnitt (34) der Armanordnung (30) befestigt ist, um sich um eine senkrechte Achse (128) zu drehen, und das erste Flüssigkeitskopplerteil (18) an dem Anschlusswinkel befestigt ist, um sich um eine Querachse (148) zu neigen,
**dadurch gekennzeichnet, dass** der innere beziehungsweise der äußere Armabschnitt (32, 34) über eine Doppelgelenkanordnung (36) miteinander verbunden sind, wobei die Doppelgelenkanordnung (36) ermöglicht, dass der äußere Armabschnitt (34) an seiner Verbindungsstelle mit einem äußeren Ende des inneren Armabschnitts (32) um ungefähr 360° verschwenkt werden kann.

2. Versorgungstankfahrzeug (20) nach Anspruch 1, wobei das erste Flüssigkeitskopplerteil (18) an dem Anschlusswinkel befestigt ist, um sich um eine Querachse (148) zu neigen, die quer zu der senkrechten Achse (128) angeordnet ist.

3. Versorgungstankfahrzeug (20) nach Anspruch 1 oder 2, wobei der innere Armabschnitt (32) der Armanordnung (30) so befestigt ist, dass er sich um eine innere senkrechte Drehachse (50) dreht.

4. Versorgungstankfahrzeug (20) nach einem der Ansprüche 1 bis 3, wobei die Gelenkverbindungsanordnung (36) eine Doppelgelenkverbindung festlegt, die eine zweite senkrechte Gelenkverbindungsachse (98, 100) umfasst, wobei wenigstens eine senkrechte Gelenkverbindungsachse (98, 100) zwischen einer Seite der Gelenkverbindungsanordnung (36) und dem inneren Armabschnitt (32) festgelegt ist und die zweite senkrechte Gelenkverbindungsachse (98, 100) zwischen einer anderen Seite der Gelenkverbindungsanordnung (36) und dem äußeren Armabschnitt (34) festgelegt ist.

5. Versorgungstankfahrzeug (20) nach einem der Ansprüche 1 bis 4, wobei der äußere Armabschnitt (34) ein paralleles Gestänge (54, 56) festlegt, das für eine Auf- und Abbewegung relativ zu der Gelenkverbindungsanordnung (36) ausgerichtet ist.

6. Versorgungstankfahrzeug (20) nach Anspruch 5, wobei eine Gewichtsausgleichsvorrichtung an das parallele Gestänge (54, 56) gekoppelt ist, um ein auf das parallele Gestänge (54, 56) wirkendes Gewicht auszugleichen, das den Hang hat, das parallele Gestänge (54, 56) nach unten zu zwingen.

7. Versorgungstankfahrzeug (20) nach einem der Ansprüche 1 bis 6, wobei die Flüssigkeitsübertragungsleitung (22) einen flexiblen Leitungsabschnitt, der ein mit dem ersten Flüssigkeitskopplerteil (18) verbundenes Ende aufweist, und wenigstens eine Leitungshalterung (158, 160) umfasst, die den flexiblen Leitungsabschnitt mit der Armanordnung (30) verbindet.

8. Versorgungstankfahrzeug (20) nach Anspruch 6 oder bei Abhängigkeit von Anspruch 6 nach Anspruch 7, wobei die Gewichtsausgleichsvorrichtung wenigstens eine Gasdruckfeder (88) umfasst.

9. Versorgungstankfahrzeug (20) nach Anspruch 6 oder bei Abhängigkeit von Anspruch 6 nach einem der Ansprüche 7 und 8, wobei es sich bei der Gewichtsausgleichsvorrichtung um eine Drehfeder handelt, die entlang der Querachse (148) angeordnet ist.

## Revendications

1. Véhicule-citerne ravitailleur (20) comprenant un conduit de transfert de fluide (22) présentant une première section de coupleur de fluide (18) à une première extrémité apte à être couplée dans une relation de transfert de fluide à une seconde section de coupleur de fluide correspondante (16) portée par un véhicule pulvérisateur (10) lorsque l'on souhaite transférer du fluide à partir du véhicule-citerne ravitailleur (20) au véhicule pulvérisateur (10), ledit véhicule-citerne ravitailleur comprenant un agencement de bras (30) présentant une section intérieure (32) connectée audit véhicule-citerne ravitailleur (20); une console de connexion pour monter ladite première section de coupleur (18) sur une section extérieure (34) dudit agencement de bras (30); ladite section extérieure (34) dudit agencement de bras (30) étant montée de manière à exécuter à la fois des déplacements transversaux et vers le haut et le bas, ladite console de connexion étant une console pivotante (118) montée sur ladite section extérieure (34) de l'agencement de bras (30) afin de pivoter autour d'un axe vertical (128), et ladite première section de coupleur de fluide (18) étant montée sur ladite console de connexion afin de basculer autour d'un axe transversal (148), **caractérisé en ce que** les sections de bras intérieure et extérieure (32, 34), respectivement, sont interconnectées par un agencement de double charnière (36), dans lequel l'agencement de double charnière (36) permet à la section de bras extérieure (34) d'osciller d'approximativement 360° au niveau de sa connexion avec une extrémité extérieure de la section de bras intérieure (32).

2. Véhicule-citerne ravitailleur (20) selon la revendication 1, dans lequel ladite première section de coupleur de fluide (18) est montée sur ladite console de connexion afin de basculer autour d'un axe transversal (148) disposé dans une relation de croisement avec ledit axe vertical (128).

3. Véhicule-citerne ravitailleur (20) selon la revendication 1 ou 2, dans lequel la section de bras intérieure (32) de l'agencement de bras (30) est montée de manière à pivoter autour d'un axe de pivotement vertical intérieur (50).

4. Véhicule-citerne ravitailleur (20) selon l'une des revendications 1 à 3, dans lequel ledit agencement de joint de charnière (36) définit un double joint de charnière, comprenant un second axe de joint de charnière vertical (98, 100), avec ledit au moins un premier axe de joint de charnière vertical (98, 100) qui est défini entre un premier côté dudit agencement de charnière (36) et ladite section de bras intérieure (32), et ledit second axe de joint de charnière vertical (98, 100) étant défini entre un autre côté dudit agencement de joint de charnière (36) et ladite section de bras extérieure (34).

5. Véhicule-citerne ravitailleur (20) selon l'une des revendications 1 à 3, dans lequel ladite section de bras extérieure (34) définit une liaison parallèle (54, 56) orientée de manière à exécuter un déplacement vers le haut et vers le bas par rapport audit agencement de joint de charnière (36).

6. Véhicule-citerne ravitailleur (20) selon la revendication 5, dans lequel un dispositif de compensateur de poids est couplé à ladite liaison parallèle (54, 56) afin de contrebalancer le poids exercé sur ladite liaison parallèle (54, 56) qui a tendance à pousser ladite liaison parallèle (54, 56) vers le bas.

7. Véhicule-citerne ravitailleur (20) selon l'une des revendications 1 à 6, dans lequel ledit conduit de transfert de fluide (22) comprend une section de conduit flexible présentant une extrémité connectée à ladite première section de coupleur de fluide (18); et au moins une première suspension pour conduit (158, 160) qui relie ladite section de conduit flexible audit agencement de bras (30).

8. Véhicule-citerne ravitailleur (20) selon la revendication 6 ou la revendication 7, lorsqu'elle dépend de la revendication 6, dans lequel ledit dispositif de compensateur de poids comprend au moins un vérin à gaz (88).

9. Véhicule-citerne ravitailleur (20) selon la revendication 6 ou l'une des revendications 7 et 8, lorsqu'elle dépend de la revendication 6, dans lequel ledit dispositif de compensateur de poids est une barre de torsion qui est située le long dudit axe transversal (148).
